# FASCICULE DE BREVET EUROPEEN

(11) **EP 3 116 729 B1**
(45) Date de publication et mention de la délivrance du brevet: **18.09.2019**
(21) Numéro de dépôt: 14714304.4
(22) Date de dépôt: 12.03.2014
(51) Int. Cl.: B60G 13/14, F16F 13/10, F16F 13/26

(54) **DISPOSITF ANTIVIBRATOIRE HYDRAULIQUE DOTÉ D'UN DISPOSITIF GÉNÉRATEUR D'ÉLECTRICITÉ**
HYDRAULISCHE SCHWINGUNGSDÄMPFENDE VORRICHTUNG MIT EINEM STROMGENERATOR
HYDRAULIC ANTI-VIBRATION DEVICE PROVIDED WITH AN ELECTRICITY GENERATOR DEVICE

(43) Date de publication de la demande: 18.01.2017
(73) Titulaire: Hutchinson, 75008 Paris (FR)
(72) Inventeur: SAUTIER, Pascal, F-45200 Paucourt (FR); TAVIN, Gérard, F-49100 Angers (FR); BELLAMY, Alain, F-41310 Ambloy (FR); LEMAIRE, Gabriel, F-28200 Saint-Denis-les-Ponts (FR)
(74) Mandataire: Cabinet Plasseraud
(86) Numéro de dépôt international: PCT/FR2014/050553
(87) Numéro de publication internationale: WO 2015/136160

(56) Documents cités:
- GB-A- 2 175 962
- GB-A- 2 461 983
- JP-A- 2011 099 474
- JP-A- 2015 017 643
- US-A1- 2010 219 641
- MOHARERI O ET AL: "Energy harvesting from vibration of a hydraulic engine mount using a turbine", MECHATRONICS (ICM), 2011 IEEE INTERNATIONAL CONFERENCE ON, IEEE, 13 avril 2011 (2011-04-13), pages 134-139, XP031911290, DOI: 10.1109/ICMECH.2011.5971270 ISBN: 978-1-61284-982-9

## Description

La présente invention est relative aux dispositifs antivibratoires hydrauliques dotés de dispositifs générateurs d'électricité et aux dispositifs générateurs d'électricité pour de tels dispositifs antivibratoires.

Plus particulièrement, l'invention concerne un dispositif antivibratoire hydraulique destiné à être interposé aux fins d'amortissement entre des premier et deuxième éléments rigides, ce dispositif antivibratoire comprenant :
- des première et deuxième armatures destinées à être fixées aux deux éléments rigides à réunir,
- un corps en élastomère qui relie entre elles les première et deuxième armatures et qui délimite au moins partiellement une première chambre hydraulique,
- une deuxième chambre hydraulique déformable qui communique avec la première chambre hydraulique par l'intermédiaire d'un passage étranglé, les première et deuxième chambres hydrauliques et le passage étranglé formant un circuit hydraulique rempli de liquide, et le dispositif antivibratoire étant conformé pour que ledit liquide se déplace alternativement dans ledit passage étranglé dans des premier et deuxième sens opposés lorsque le première et deuxième armatures sont soumises à des mouvements vibratoires relatifs,
- un dispositif générateur de courant électrique comprenant d'une part, une microturbine montée rotative autour d'un axe de rotation dans le passage étranglé et d'autre part, une génératrice couplée à la microturbine pour produire du courant électrique lorsque la microturbine tourne.

Mohareri et al. ont déjà proposé un support antivibratoire de ce type (Proceedings of the IEEE International Conference on Mechatronics, 13-15 avril 2011, Istambul, Turquie, pp 134-139).

La présente invention a notamment pour objet de perfectionner les supports antivibratoires du type ci-dessus, et notamment d'augmenter la quantité d'électricité produite.

A cet effet, selon l'invention, un support antivibratoire du genre en question est caractérisé en ce que la microturbine est conformée pour être entraînée toujours dans un même sens de rotation par le liquide lorsque le liquide se déplace alternativement dans les premier et deuxième sens dans le passage étranglé.

Grâce à ces dispositions, on optimise l'utilisation de l'énergie hydraulique disponible pour la transformer en énergie électrique, en évitant les gaspillages d'énergie dus aux inversions de sens de rotation de la turbine.

Dans divers modes de réalisation du support antivibratoire selon l'invention, on peut éventuellement avoir recours en outre à l'une et/ou à l'autre des dispositions suivantes :
- le passage étranglé comporte une chambre de microturbine dans laquelle la microturbine est montée rotative, et des premier et deuxième ajutages qui débouchent dans ladite chambre de microturbine sensiblement tangentiellement par rapport à l'axe de rotation en provenance respectivement des première et deuxième chambres hydrauliques, lesdits premier et deuxième ajutages débouchant dans la chambre de microturbine respectivement selon des première et deuxième directions d'injections correspondant toutes les deux audit sens de rotation ;
- les premier et deuxième ajutages débouchent dans la chambre de microturbine (17) dans des positions sensiblement diamétralement opposées par rapport à l'axe de rotation ;

- la microturbine comporte des pales incurvées disposées autour de l'axe de rotation dans un plan radial médian, chaque pale étant sensiblement perpendiculaire audit plan radial médian et comprenant une partie intérieure sensiblement radiale et une partie extérieure qui est disposée sensiblement selon les première et deuxième directions d'injections lorsque ladite pale se trouve en correspondance respectivement avec les premier et deuxième ajutages ;
- la microturbine comporte des pales disposées autour de l'axe de rotation dans un plan radial médian, chaque pale étant sensiblement perpendiculaire audit plan radial médian, et ladite microturbine présente un espace libre entouré par les pales ;
- les pales occupent une première épaisseur radiale et ledit espace libre occupe une deuxième épaisseur radiale, ladite première épaisseur radiale étant comprise entre 0,47 et 0,87 fois la somme des première et deuxième épaisseurs radiales ;
- la microturbine comporte en outre au moins un moyeu d'étendant selon l'axe de rotation et au moins un plateau radial reliant ledit moyeu aux pales ;
- la chambre de microturbine est un alésage ménagé dans une première paroi rigide, ledit alésage étant délimité axialement par un fond et radialement par une surface cylindrique dans laquelle débouchent les premier et deuxième ajutages, ledit alésage étant fermé par le plateau à l'opposé du fond de l'alésage, ledit moyeu étant monté rotatif dans le fond de l'alésage ;
- la génératrice comporte un stator et un rotor solidaire de la microturbine, ledit rotor comportant un tourillon qui s'étend selon l'axe de rotation à l'opposé dudit moyeu, ledit tourillon étant monté rotatif dans le fond d'un boîtier contenant la génératrice et étant solidaire de ladite première paroi rigide ;
- le passage étranglé comprend des premier et deuxième tronçons qui débouchent dans la chambre de microturbine par lesdits premier et deuxième ajutages, lesdits premier et deuxième tronçons et lesdits premier et de ajutages étant délimités par des première et deuxième gorges creusées dans la première paroi rigide et ouvertes axialement vers la deuxième chambre hydraulique, lesdites première et deuxième gorges étant fermées axialement par une deuxième paroi rigide solidaire de la première paroi rigide et comprenant ledit boîtier, les première et deuxième parois rigides formant ensemble une cloison qui sépare les première et deuxième chambres hydrauliques ;
- la génératrice comporte un rotor et un stator, le rotor comportant un nombre 2.N de pôles aimantés alternés qui sont équirépartis angulairement et qui appartiennent à au moins un aimant permanent, N étant un entier naturel non nul, et le stator comporte un anneau ferromagnétique disposé en regard des pôles aimantés et portant un nombre 2.N de bobines toriques équiréparties angulairement ;
- le dispositif antivibratoire comporte en outre un circuit électronique comprenant au moins un convertisseur adapté pour convertir en courant continu un courant électrique produit par la génératrice, un dispositif de stockage d'énergie électrique alimenté par le convertisseur, et un dispositif de commande relié à un capteur et adapté pour commander un actionneur en fonction d'informations reçues du capteur, ledit actionneur étant adapté pour agir sur une partie du dispositif antivibratoire ;
- ledit capteur est un capteur de vibrations solidaire de la deuxième armature ;
- ledit actionneur est adapté pour sélectivement bloquer ou laisser libre une paroi mobile qui délimite partiellement la première chambre hydraulique.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective d'un dispositif antivibratoire selon une forme de réalisation de l'invention, en coupe axiale,
- les figures 2 et 3 sont des vues en perspective, vues de ¾ de dessus et de dessous, de la cloison rigide séparant les deux chambres hydrauliques du dispositif antivibratoire de la figure 1,
- la figure 4 est une vue en coupe radiale de la cloison des figures 2 et 3, la coupe étant prise selon la ligne IV-IV de la figure 1,
- la figure 5 est une vue de détail de la coupe de la figure 4,
- la figure 6 est une vue en coupe radiale du dispositif générateur d'électricité équipant le dispositif antivibratoire de la figure 1, la coupe étant prise selon la ligne VI-VI de la figure 1,
- et la figure 7 est un schéma bloc du circuit électronique équipant le dispositif antivibratoire de la figure 1.

Sur les différentes figures, les mêmes références désignent des éléments identiques ou similaires.

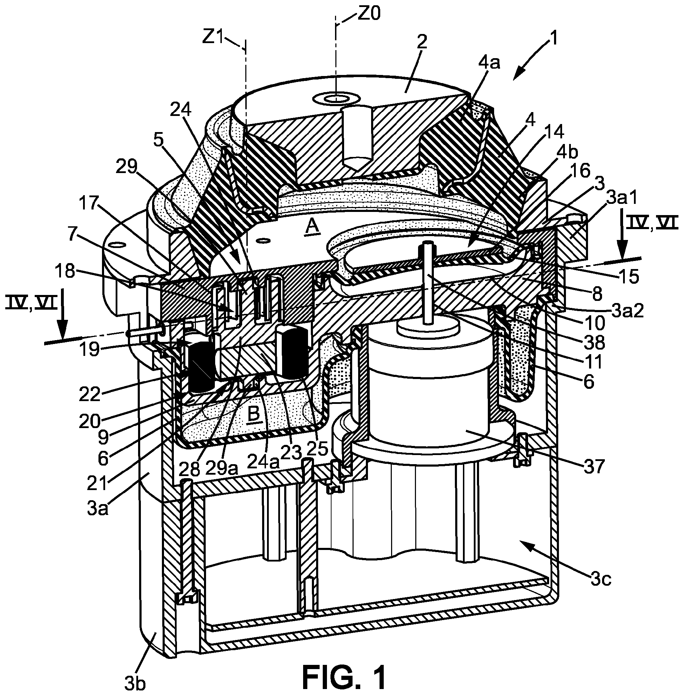

La figure 1 représente un dispositif antivibratoire hydraulique 1, comportant :
- une première armature rigide 2 présentant par exemple la forme d'une embase métallique et destinée à être fixée notamment au moteur d'un véhicule pour le supporter,
- une deuxième armature rigide 3, par exemple une armature annulaire en métal ou matière plastique, qui est destinée à être fixée par exemple à la caisse du véhicule directement,
- un corps en élastomère 4 capable de supporter notamment les efforts statiques dus au poids du moteur du véhicule et reliant les première et deuxième armatures 2, 3, ce corps en élastomère pouvant présenter par exemple une forme de cloche qui s'étend axialement selon un axe Z0 par exemple vertical, entre un sommet 4a adhérisé et surmoulé sur la première armature 2 et une base annulaire 4b surmoulée et adhérisée sur la deuxième armature 3.

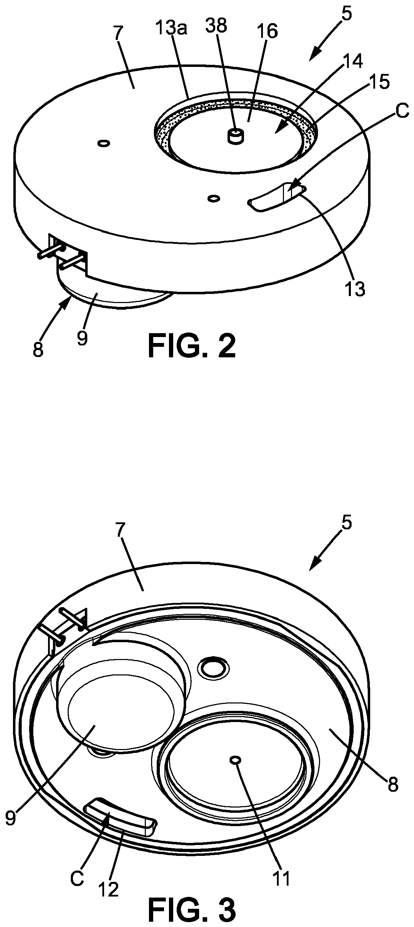

Le support antivibratoire 1 comporte en outre une cloison rigide 5 radiale, solidarisée avec la deuxième armature 3 et appliquée de façon étanche contre la base 4b du corps en élastomère, en délimitant avec celui-ci une première chambre A hydraulique, en l'occurrence une chambre de travail. Une membrane souple en élastomère 6 formant soufflet, appliquée de façon étanche contre la cloison 5 à l'opposé de la chambre de travail A, en délimitant avec ladite cloison 5 une deuxième chambre B hydraulique, en l'occurrence une chambre de compensation, qui communique avec la chambre de travail A par un passage étranglé C formé dans la cloison rigide 5, visible notamment sur les figures 2 à 4. La chambre de travail A, la chambre de compensation B et le passage étranglé C forment ensemble un circuit hydraulique rempli de liquide, notamment du glycol ou autre.

Le passage étranglé C est dimensionné pour présenter une fréquence de résonance comprise par exemple entre 5 et 20 Hz, typiquement entre 8 et 12 Hz, correspondant aux mouvements de hachis dus au roulage du véhicule.

Dans l'exemple représenté sur la figure 1, le support antivibratoire hydraulique comporte en outre un couvercle 3a, réalisé par exemple en matière plastique moulée, qui recouvre le soufflet 6 vers le bas. Ce couvercle 3a peut comporter par exemple une bride 3a1 fixée à la première armature par tout moyen, par exemple par vissage, et la paroi latérale dudit couvercle 3a peut éventuellement comporter un épaulement intérieur 3a2 qui maintient la cloison rigide 5 plaquée contre la deuxième armature 3 et la base du corps en élastomère.

Le dispositif antivibratoire 1 peut en outre comporter un carter 3b assemblé par exemple sous le couvercle 3a et qui délimite un espace intérieur 3c destiné à contenir un circuit électronique (non représenté sur la figure 1) décrit plus loin.

La cloison rigide 5 peut éventuellement être formée par des première et deuxième parois rigides 7, 8 superposées, réalisées par exemple en matière plastique moulée ou en alliage léger. La première paroi rigide 7 peut être disposée par exemple vers la chambre de travail A et la deuxième paroi rigide 8 vers la chambre de compensation B.

Comme représenté sur les figures 1 à 4, la deuxième paroi rigide 8 peut former par exemple un boîtier 9 ouvert vers le haut, c'est-à-dire vers la première paroi rigide 8, et une cuvette 10 également ouverte vers le haut. La deuxième paroi rigide 8 peut en outre comporter un trou 11 axial au centre de la cuvette 10 et une ouverture 12 vers le bas, qui fait communiquer le passage étranglé C avec la chambre de compensation B.

La première paroi rigide 7 peut comporter une ouverture 13 vers la haut, qui fait communiquer le passage étranglé C avec la chambre de travail A, et éventuellement un trou 13a fermé par une paroi mobile 14 qui délimite partiellement la chambre de travail A. La paroi mobile 14 peut éventuellement comporter une paroi radiale rigide 16 reliée de façon étanche à la première paroi rigide 7 par une membrane d'élastomère 15. La cuvette 10 délimite ainsi avec la paroi mobile 14 une chambre pneumatique remplie d'air.

Comme représenté sur les figures 1, 4, 5, La première paroi rigide 7 peut délimiter une chambre de microturbine 17 appartenant au passage étranglé C et dans laquelle une microturbine 18 est montée rotative autour d'un axe de rotation Z1 parallèle à l'axe Z0. La microturbine 18 fait partie d'un dispositif générateur de courant électrique 19 qui comporte en outre une génératrice 20 couplée à la microturbine 18 pour produire du courant électrique lorsque la microturbine 18 tourne.

La génératrice 20 comporte un stator 22 et un rotor 21 solidaire de la microturbine 18. La génératrice 20 peut être contenue par exemple dans le boîtier 9 formé par la deuxième paroi rigide 8. Le rotor 21 peut être formé d'une pièce avec la microturbine 18.

Selon une forme de réalisation avantageuse de l'invention, le rotor 21 peut comporter un nombre 2.N de pôles aimantés alternés qui sont équirépartis angulairement autour de l'axe de rotation Z1 et qui appartiennent à au moins un aimant permanent 23, N étant un entier naturel non nul. Dans l'exemple considéré, N = 1 et le rotor comporte un seul aimant permanent 23. Le stator 22 comporte un anneau ferromagnétique 25 disposé en regard des pôles aimantés et autour d'eux, et cet anneau 25 porte un nombre 2.N de bobines toriques équiréparties angulairement, ici deux bobines 26 bobinées en opposition, chacune sur une étendue angulaire qui peut par exemple être d'environ 90 degrés. Ce type de génératrice présente l'avantage de ne pas présenter de point dur pouvant gêner la rotation du rotor 21 et de la microturbine 18.

Bien entendu, d'autres types de génératrice électrique peuvent être utilisés. Notamment, le stator pourrait comporter des aimants permanents (par exemple 12) et le rotor pourrait comporter un noyau ferromagnétique formant des pôles saillants radialement (par exemple 4) autour desquels sont enroulées des bobines produisant du courant électrique lors de la rotation du rotor.

Il est également possible d'associer plusieurs microturbines à une génératrice électrique, par exemple en les disposant de part et d'autre du rotor de la génératrice.

La chambre de microturbine 17 peut avantageusement être un alésage ménagé dans une première paroi rigide 7, ledit alésage étant délimité axialement vers le haut par un fond et radialement par une surface cylindrique.

La microturbine 18 peut comporter un plateau 28 en forme de disque, disposé radialement par rapport à l'axe de rotation Z1 et fermant l'alésage susmentionné vers le bas. Le plateau 28 porte un moyeu 29 et des pales 30. Le moyeu 29 s'étend selon l'axe de rotation Z1 et peut être monté rotatif dans le fond de l'alésage formant la chambre de microturbine 17, éventuellement avec interposition d'une bague de glissement 24 formant palier. Le rotor 21 de la génératrice peut lui-même comporter un tourillon 29a qui est monté rotatif dans le fond du boîtier 9 susmentionné, éventuellement avec interposition d'une bague de glissement 24a formant palier.

Les pales 30 sont disposées autour de l'axe de rotation Z1 dans un plan médian radial, chaque pale étant sensiblement perpendiculaire audit plan radial médian. Avantageusement, la microturbine 18 présente un espace annulaire libre 27 compris radialement entre le moyeu 29 et les pales 30.

Cet espace annulaire libre 27 peut présenter une épaisseur radiale telle que R-R1 soit compris entre 0,7.2(R-R0)/3 et 1,3.2(R-R0)/3 (soit entre environ 0,47(R-R0) et 0,87(R-R0)), avantageusement R-R1 soit compris entre 0,9x2(R-R0)/3 et 1,1x2(R-R0)/3, par exemple de l'ordre de 2(R-R0)/3, où :
- 2.R est le diamètre extérieur des pales 30, c'est-à-dire sensiblement le diamètre intérieur de la chambre de microturbine 17 (ce diamètre peut être par exemple de l'ordre de 1 à 3 cm),
- 2.R1 le diamètre intérieur des pales 30, et
- 2.R0 est le diamètre extérieur du moyeu 29 au centre de l'espace libre 27. Ce diamètre 2.R0 est généralement faible et peut même éventuellement être réduit à 0 en adoptant une structure de microturbine ne comportant pas de moyeu 29 au centre de l'espace libre 27 (par exemple la microturbine 18 pourrait comporter deux plateaux 28 encadrant axialement les pales 30, le plateau 28 « supérieur » étant alors monté rotatif dans le fond de l'alésage qui forme la chambre de microturbine 17).

La géométrie susmentionnée de la microturbine 18 permet de créer un tourbillon au centre de la microturbine. Les rapports dimensionnels susmentionnés permettent en particulier que ce tourbillon entraine un volume de fluide proche de celui qui sort de la turbine, ce qui, dans un mode de réalisation ne faisant pas partie de l'invention, facilite les changements de sens de passage du fluide dans la turbine.

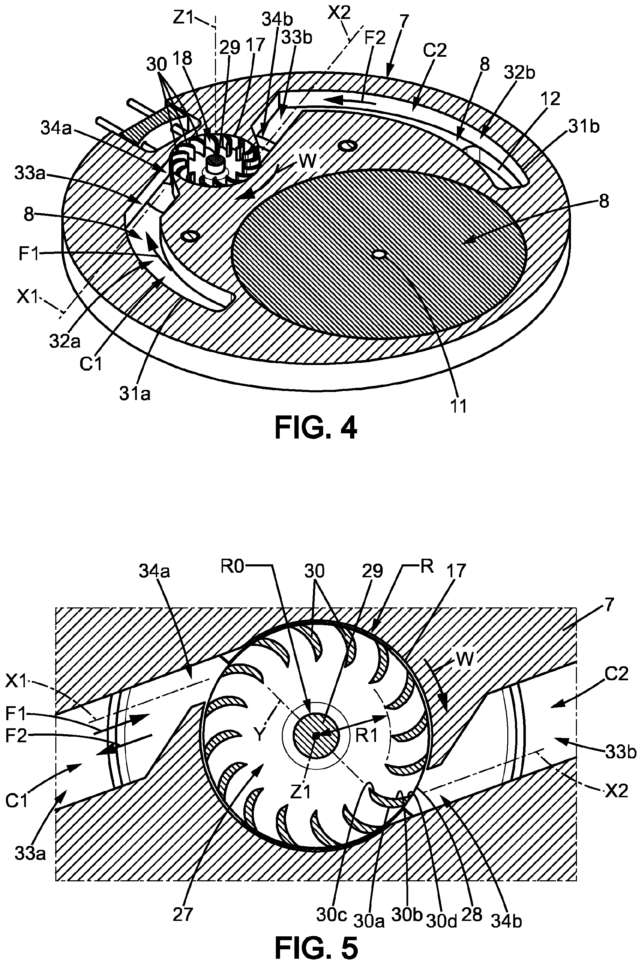

Comme représenté plus en détail sur la figure 4, le passage étranglé C peut comporter, outre la chambre de microturbine 17, des premier et deuxième tronçons C1, C2 qui font communiquer ladite chambre de microturbine 17 respectivement avec la chambre de travail A par l'ouverture 13 et avec la chambre de compensation B par l'ouverture 12.

Ces tronçons C1, C2 peuvent être délimités respectivement par des première et deuxième gorges 31a, 31b creusées dans la première paroi rigide 7 et ouvertes vers le bas, lesdites première et deuxième gorges étant fermées vers la chambre de compensation B par la deuxième paroi rigide 8.

Dans l'exemple considéré, les tronçons C1, C2 comportent chacun une partie en arc de cercle centrée sur l'axe Z0, respectivement 32a, 32b. Ces parties en arc de cercle 32a, 32b relient respectivement les ouvertures 13, 12 respectivement à des à des premier et deuxième ajutages, respectivement 33a, 33b qui débouchant sensiblement tangentiellement dans la chambre de microturbine 17 (voir figure 5). Avantageusement, chaque ajutage 33a, 33b se termine, vers la chambre de microturbine 17, par un convergent, respectivement 34a, 34b. Les premier et deuxième ajutages 33a, 33b peuvent déboucher dans la chambre de microturbine 17 en des positions sensiblement diamétralement opposées par rapport à l'axe de rotation Z1

La microturbine est conformée pour être entraînée toujours dans un même sens de rotation W par le liquide du circuit hydraulique lorsque ledit liquide se déplace alternativement dans les premier et deuxième sens opposés F1, F2 dans le passage étranglé C (le sens F1 correspond ici à un déplacement du liquide de la chambre de travail A vers la chambre de compensation B et F2 de la chambre de compensation B vers la chambre de travail A). A cet effet, les premier et deuxième ajutages 33a, 33b débouchent dans la chambre de microturbine 17 sensiblement tangentiellement par rapport à l'axe de rotation Z1, respectivement dans les sens F1, F2, selon des première et deuxième directions d'injections correspondant toutes les deux audit sens de rotation W. Cette rotation à sens unique de la microturbine 18 permet une utilisation optimale de la faible puissance hydraulique disponible. La rotation entretenue de la microturbine 18 est en outre facilitée par l'espace libre 27 susmentionné, qui permet l'établissement d'un courant tourbillonnaire de liquide dans le sens de rotation W.

Les pales 30 de la microturbine 18 sont de préférence incurvées dans le plan radial, avec un extrados 30a convexe tourné dans le sens de rotation W et un intrados 30b concave tourné à l'opposé du sens de rotation W. Avantageusement, l'intrados 30b de chaque pale 30 comporte une partie radialement intérieure 30c qui est disposée dans une direction sensiblement radiale Y et une partie radialement extérieure 30d qui est disposée sensiblement selon la direction d'injection X1, X2 lorsque ladite pale 30 se trouve en correspondance avec l'un des premier et deuxième ajutages 33a, 33b.

Comme représenté sur la figure 1, le dispositif antivibratoire 1 comporte en outre un actionneur électrique 37, par exemple similaire à celui décrit dans le document EP1614931, qui est adapté pour sélectivement bloquer ou laisser libre la paroi mobile 14 en fonction des commandes du circuit électronique susmentionné. Cet actionneur 37 peut par exemple comporter une valve à commande électrique qui peut soit mettre à l'air libre la chambre pneumatique délimitée par la cuvette 10 et la paroi mobile 14, soit l'isoler. L'actionneur 37 comporte en parallèle de la valve susmentionnée, un clapet de sortie d'air qui, lorsque la valve est fermée, permet uniquement la sortie d'air de la chambre pneumatique, de sorte que cette chambre pneumatique se vide progressivement sous l'effet des mouvements de la paroi mobile 14 dus aux mouvements vibratoires du moteur, de sorte que la paroi mobile vient se plaquer contre le fond de la cuvette 10 lorsque le vide est fait dans la chambre pneumatique, ce qui bloque ladite paroi mobile.

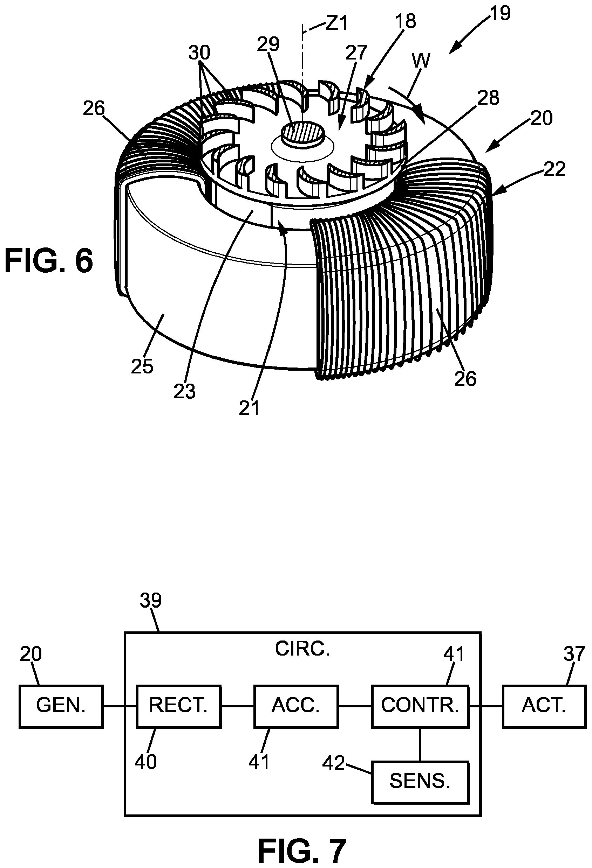

Comme représenté sur la figure 7, le circuit électronique 39 (CIRC.) peut comporter par exemple :
- un convertisseur 40 (CONV.) connecté aux bobines 26 de la génératrice 20 (GEN.) pour générer un courant continu à partir du courant alternatif produit par lesdites bobines 26,
- un dispositif de stockage d'énergie électrique 41 (ACC.), par exemple une capacité, alimenté par le convertisseur 40,
- un dispositif de commande 42 (CONTR.), par exemple comprenant un microcontrôleur, alimenté par le dispositif de stockage 41 et commandant l'actionneur 37 (ACT.),
- un capteur 42 (SENS.) relié au dispositif de commande 41, par exemple un capteur de vibrations tel qu'un accéléromètre ou autre.

L'ensemble de ce circuit électronique 39 peut être logé dans l'espace intérieur 3C du carter 3b, et ne nécessite pas d'échanges d'informations avec l'extérieur ni d'alimentation électrique extérieure. Eventuellement, le capteur 42 ou un capteur supplémentaire, pourrait être disposé ailleurs que dans le carter 3b, selon l'application envisagée et le montage du dispositif antivibratoire 1.

Le dispositif antivibratoire 1 qui vient d'être décrit fonctionne comme suit.

Lorsque le véhicule dans lequel est installé le dispositif antivibratoire fonctionne, les mouvements vibratoires du moteur produisent des mouvements de liquide dans le passage étranglé C entre les chambres hydrauliques A et B, alternativement dans les sens F1 et F2. Ces mouvements de liquide mettent en rotation la microturbine 18 et donc le rotor 21, dans le sens de rotation W, de sorte que les bobines 26 de la génératrice génèrent un courant électrique qui est redressé par le convertisseur 40 et stocké dans le dispositif de stockage 41.

Lorsque le moteur fonctionne au ralenti sans roulage du véhicule, les mouvements relatifs entre les première et deuxième armatures 2, 3 sont généralement de fréquence comprise entre 10 et 40 Hz selon le type de moteur et de faible amplitude (inférieure à 0,2 mm). Dans ces conditions, la puissance électrique produite par la génératrice 20 est relativement faible, par exemple de quelques dizaines à quelques centaines de milliwatts. Dans ces circonstances, détectées à l'aide du capteur 42, le dispositif de commande 41 commande l'actionneur 37 pour laisser libre la paroi mobile 14, qui a alors un effet de découplage évitant de transmettre les vibrations du moteur à la caisse du véhicule.

Lorsque le véhicule roule, les mouvements relatifs dits de hachis entre les première et deuxième armatures 2, 3 sont de fréquence relativement faible (généralement comprise entre 10 et 15 Hz selon le type de moteur) et de grande amplitude (supérieure à 0,3 mm). Dans ces conditions, la puissance électrique produite par la génératrice 20 peut être plus importante, par exemple de quelques Watts (par exemple de l'ordre de 2 W). Dans ces circonstances, détectées à l'aide du capteur 42, le dispositif de commande 41 commande l'actionneur 37 pour bloquer la paroi mobile 14 comme expliqué ci-dessus, de sorte que le passage étranglé C joue alors son rôle antivibratoire habituel. Le dimensionnement des sections de passage du fluide dans le passage étranglé C et dans la microturbine ne modifie pas notablement le comportement hydraulique du support moteur, et donc la réponse en raideur et angle de phase en fonction de la fréquence d'excitation du système, par rapport à un support antivibratoire similaire dépourvu de microturbine.

On notera que l'actionneur 37 et la paroi mobile 14 pourraient être remplacés par tout autre système de pilotage ou par tout autre système actif générant des contre-vibrations (l'actionneur électrique alimenté à partir de la génératrice 20 peut alors commander tout organe de commande vibrant tel que piston, masse vibrante ou autre).

On notera également que la forme torique du stator 22 facilite un démarrage de la microturbine sous très faible sollicitation (inférieure à 0.1mm au niveau de l'axe Z0), car il n'y a pas de point dur d'équilibre magnétique entre l'aimant du rotor et le stator :
Les forces magnétiques sont dans l'axe de l'aimant et ne perturbent pas le couple de démarrage.

## Revendications

1. Dispositif antivibratoire hydraulique destiné à être interposé aux fins d'amortissement entre des premier et deuxième éléments rigides, ce dispositif antivibratoire comprenant :
- des première et deuxième armatures (2, 3) destinées à être fixées aux deux éléments rigides à réunir,
- un corps en élastomère (4) qui relie entre elles les première et deuxième armatures et qui délimite au moins partiellement une première chambre hydraulique (A),
- une deuxième chambre hydraulique (B) déformable qui communique avec la première chambre hydraulique (A) par l'intermédiaire d'un passage étranglé (C), les première et deuxième chambres hydrauliques et le passage étranglé formant un circuit hydraulique rempli de liquide, et le dispositif antivibratoire étant conformé pour que ledit liquide se déplace alternativement dans ledit passage étranglé (C) dans des premier et deuxième sens opposés (F1, F2) lorsque le première et deuxième armatures (2, 3) sont soumises à des mouvements vibratoires relatifs,
- un dispositif générateur de courant électrique (19) comprenant d'une part, une microturbine (18) montée rotative autour d'un axe de rotation (Z1) dans le passage étranglé (C) et d'autre part, une génératrice (20) couplée à la microturbine pour produire du courant électrique lorsque la microturbine tourne,
**caractérisé en ce que** la microturbine (18) est conformée pour être entraînée toujours dans un même sens de rotation (W) par le liquide lorsque le liquide se déplace alternativement dans les premier et deuxième sens (F1, F2) dans le passage étranglé (C).

2. Dispositif antivibratoire selon la revendication 1, dans lequel le passage étranglé (C) comporte une chambre de microturbine (17) dans laquelle la microturbine (18) est montée rotative, et des premier et deuxième ajutages (33a, 33b) qui débouchent dans ladite chambre de microturbine (17) sensiblement tangentiellement par rapport à l'axe de rotation en provenance respectivement des première et deuxième chambres hydrauliques (A, B), lesdits premier et deuxième ajutages (33a, 33b) débouchant dans la chambre de microturbine respectivement selon des première et deuxième directions d'injections (X1, X2) correspondant toutes les deux audit sens de rotation (W).

3. Dispositif antivibratoire selon la revendication 2, dans lequel les premier et deuxième ajutages (33a, 33b) débouchent dans la chambre de microturbine (17) dans des positions sensiblement diamétralement opposées par rapport à l'axe de rotation (Z1).

4. Dispositif antivibratoire selon l'une quelconque des revendications 2 et 3, dans lequel la microturbine (18) comporte des pales (30) incurvées disposées autour de l'axe de rotation (Z1) dans un plan radial médian, chaque pale étant sensiblement perpendiculaire audit plan radial médian et comprenant une partie intérieure (30c) sensiblement radiale et une partie extérieure (30d) qui est disposée sensiblement selon les première et deuxième directions d'injections (X1, X2) lorsque ladite pale se trouve en correspondance respectivement avec les premier et deuxième ajutages (33a, 33b).

5. Dispositif antivibratoire selon l'une quelconque des revendications précédentes, dans lequel la microturbine (18) comporte des pales (30) disposées autour de l'axe de rotation (Z1) dans un plan radial médian, chaque pale (30) étant sensiblement perpendiculaire audit plan radial médian, et ladite microturbine présente un espace libre (27) entouré par les pales (30).

6. Dispositif antivibratoire selon la revendication 5, dans lequel les pales (30) occupent une première épaisseur radiale (R-R1) et ledit espace libre occupe une deuxième épaisseur radiale (R1-R0), ladite première épaisseur radiale (R-R1) étant comprise entre 0,47 et 0,87 fois la somme des première et deuxième épaisseurs radiales (R-R0).

7. Dispositif antivibratoire selon l'une quelconque des revendications 5 et 6, dans lequel la microturbine (18) comporte en outre au moins un moyeu (29) d'étendant selon l'axe de rotation (Z1) et au moins un plateau (28) radial reliant ledit moyeu (29) aux pales (30).

8. Dispositif antivibratoire selon la revendication 7, quand elle dépend de la revendication 2, dans lequel la chambre de microturbine (17) est un alésage ménagé dans une première paroi rigide (7), ledit alésage étant délimité axialement par un fond et radialement par une surface cylindrique dans laquelle débouchent les premier et deuxième ajutages (33A, 33b), ledit alésage étant fermé par le plateau à l'opposé du fond de l'alésage, ledit moyeu (29) étant monté rotatif dans le fond de l'alésage.

9. Dispositif antivibratoire selon la revendication 8, dans lequel la génératrice (20) comporte un stator (22) et un rotor (21) solidaire de la microturbine (18), ledit rotor comportant un tourillon (29a) qui s'étend selon l'axe de rotation (Z1) à l'opposé dudit moyeu (29), ledit tourillon (29a) étant monté rotatif dans le fond d'un boîtier (9) contenant la génératrice et étant solidaire de ladite première paroi rigide (7).

10. Dispositif antivibratoire selon la revendication 9, dans lequel le passage étranglé (C) comprend des premier et deuxième tronçons (C1, C2) qui débouchent dans la chambre de microturbine (17) par lesdits premier et deuxième ajutages (33a, 33b), lesdits premier et deuxième tronçons et lesdits premier et de ajutages étant délimités par des première et deuxième gorges (31a, 31b) creusées dans la première paroi rigide (7) et ouvertes axialement vers la deuxième chambre hydraulique (B), lesdites première et deuxième gorges (31a, 31b) étant fermées axialement par une deuxième paroi rigide (8) solidaire de la première paroi rigide (7) et comprenant ledit boîtier (9), les première et deuxième parois rigides formant ensemble une cloison (5) qui sépare les première et deuxième chambres hydrauliques (A, B).

11. Dispositif antivibratoire selon l'une quelconque des revendications précédentes, dans lequel la génératrice (20) comporte un rotor (21) et un stator (22), le rotor (21) comportant un nombre 2.N de pôles aimantés alternés qui sont équirépartis angulairement et qui appartiennent à au moins un aimant permanent (23), N étant un entier naturel non nul, et le stator (22) comporte un anneau ferromagnétique (25) disposé en regard des pôles aimantés et portant un nombre 2.N de bobines toriques (26) équiréparties angulairement.

12. Dispositif antivibratoire selon l'une quelconque des revendications précédentes, dans lequel le dispositif antivibratoire comporte en outre un circuit électronique (39) comprenant au moins :
- un convertisseur (40) adapté pour convertir en courant continu un courant électrique produit par la génératrice (20),
- un dispositif de stockage d'énergie électrique (41) alimenté par le convertisseur,
- et un dispositif de commande (41) relié à un capteur (42) et adapté pour commander un actionneur (37) en fonction d'informations reçues du capteur (42), ledit actionneur étant adapté pour agir sur une partie du dispositif antivibratoire.

13. Dispositif antivibratoire selon la revendication 12, dans lequel ledit capteur (42) est un capteur de vibrations solidaire de la deuxième armature (3).

14. Dispositif antivibratoire selon la revendication 12 ou la revendication 13, dans lequel ledit actionneur (37) est adapté pour sélectivement bloquer ou laisser libre une paroi mobile (14) qui délimite partiellement la première chambre hydraulique (A).

## Patentansprüche

1. Hydraulische Antivibrationsvorrichtung, die dazu bestimmt ist, zu Dämpfungszwecken zwischen einem ersten und einem zweiten starren Element angeordnet zu sein, wobei diese Antivibrationsvorrichtung umfasst:
- ein erstes und ein zweites Stützbauteil (2, 3), die dazu bestimmt sind, an den beiden zu verbindenden starren Elementen befestigt zu sein,
- einen Elastomer-Körper (4), der das erste und das zweite Stützbauteil miteinander verbindet, und der zumindest teilweise eine erste Hydraulikkammer (A) begrenzt,
- eine verformbare zweite Hydraulikkammer (B), die mit der ersten Hydraulikkammer (A) über einen gedrosselten Durchgang (C) in Verbindung steht, wobei die erste und zweite Hydraulikkammer und der gedrosselte Durchgang einen mit Flüssigkeit gefüllten Hydraulikkreis bilden, und wobei die Antivibrationsvorrichtung dazu angepasst ist, dass sich die Flüssigkeit in dem gedrosselten Durchgang (C) abwechselnd in einer ersten und einer zweiten Richtung (F1, F2) bewegt, die entgegengesetzt sind, wenn das erste und das zweite Stützbauteil (2, 3) relativen Schwingungsbewegungen ausgesetzt sind,
- eine Vorrichtung zur Erzeugung von elektrischem Strom (19), umfassend einerseits eine Mikroturbine (18), die um eine Rotationsachse (Z1) drehbar in dem gedrosselten Durchgang (C) montiert ist, und andererseits einen Generator (20), der mit der Mikroturbine gekoppelt ist, um elektrischen Strom zu erzeugen, wenn sich die Mikroturbine dreht,
**dadurch gekennzeichnet, dass** die Mikroturbine (18) dazu konfiguriert ist, immer in einer gleichen Drehrichtung (W) durch die Flüssigkeit angetrieben zu werden, wenn sich die Flüssigkeit abwechselnd in der ersten und der zweiten Richtung (F1, F2) in dem gedrosselten Durchgang (C) bewegt.

2. Antivibrationsvorrichtung nach Anspruch 1, wobei der gedrosselte Durchgang (C) eine Mikroturbinen-Kammer (17) umfasst, in der die Mikroturbine (18) drehbar gelagert ist, und eine erste und eine zweite Düse (33a, 33b) umfasst, die im Wesentlichen tangential bezüglich der Rotationsachse in die Mikroturbinenkammer (17) einmünden, wobei sie jeweils von der ersten bzw. zweiten Hydraulikkammer (A, B) kommen, wobei die erste und die zweite Düse (33a, 33b) in die Mikroturbinenkammer jeweils gemäß einer ersten bzw. einer zweiten Einspritzrichtung (X1, X2) einmünden, die beide der Drehrichtung (W) entsprechen.

3. Antivibrationsvorrichtung nach Anspruch 2, wobei die erste und die zweite Düse (33a, 33b) in die Mikroturbinenkammer (17) in Bezug auf die Rotationsachse (Z1) im Wesentlichen diametral entgegengesetzten Positionen einmünden.

4. Antivibrationsvorrichtung nach einem der Ansprüche 2 und 3, wobei die Mikroturbine (18) gebogene Schaufeln (30) umfasst, die um die Rotationsachse (Z1) herum in einer mittleren radialen Ebene angeordnet sind, wobei jede Schaufel im Wesentlichen senkrecht zu der mittleren radialen Ebene verläuft und einen im Wesentlichen radialen inneren Abschnitt (30c) sowie einen äußeren Abschnitt (30d) umfasst, der im Wesentlichen entlang der ersten bzw. der zweiten EinspritzRichtung (X1, X2) angeordnet ist, wenn sich die Schaufel in Übereinstimmung jeweils mit der ersten bzw. der zweiten Düse (33a, 33b) befindet.

5. Antivibrationsvorrichtung nach einem der vorhergehenden Ansprüche, wobei die Mikroturbine (18) Schaufeln (30) umfasst, die um die Rotationsachse (Z1) herum in einer mittleren radialen Ebene angeordnet sind, wobei jede Schaufel (30) im Wesentlichen senkrecht zu der mittleren radialen Ebene verläuft, und wobei die Mikroturbine einen Freiraum (27) umfasst, der von den Schaufeln (30) umgeben ist.

6. Antivibrationsvorrichtung nach Anspruch 5, wobei die Schaufeln (30) eine erste radiale Ausdehnung (R-R1) einnehmen und der Freiraum eine zweite radiale Ausdehnung (R1-R0) einnimmt, wobei die erste radiale Ausdehnung (R-R1) zwischen dem 0,47-fachen und dem 0,87-fachen der Summe aus der ersten und zweiten radialen Ausdehnung (R-R0) beträgt.

7. Antivibrationsvorrichtung nach einem der Ansprüche 5 und 6, wobei die Mikroturbine (18) weiterhin wenigstens eine Nabe (29), die sich entlang der Rotationsachse (Z1) erstreckt, und wenigstens eine radiale Platte (28) umfasst, welche die Nabe (29) mit den Schaufeln (30) verbindet.

8. Antivibrationsvorrichtung nach Anspruch 7 unter Rückbeziehung auf Anspruch 2, wobei die Mikroturbinenkammer (17) eine Bohrung ist, die in eine erste starre Wand (7) eingebracht ist, wobei die Bohrung axial durch einen Boden und radial durch eine zylindrische Fläche begrenzt ist, in welche die erste und die zweite Düse (33A, 33b) einmünden, wobei die Bohrung durch die Platte gegenüber dem Boden der Bohrung verschlossen ist, und wobei die Nabe (29) im Boden der Bohrung drehbar gelagert ist.

9. Antivibrationsvorrichtung nach Anspruch 8, wobei der Generator (20) einen Stator (22) und einen Rotor (21) umfasst, der fest mit der Mikroturbine (18) verbunden ist, wobei der Rotor einen Zapfen (29a) umfasst, der sich entlang der Rotationsachse (Z1) erstreckt, gegenüber der Nabe (29), wobei der Zapfen (29a) drehbar in dem Boden eines Gehäuses (9) montiert ist, das den Generator enthält und fest mit der ersten starren Wand (7) verbunden ist.

10. Antivibrationsvorrichtung nach Anspruch 9, wobei der gedrosselte Durchgang (C) einen ersten und einen zweiten Abschnitt (C1, C2) umfasst, die in die Mikroturbinenkammer (17) durch die erste und die zweite Düse (33a, 33b) einmünden, wobei der erste und der zweite Abschnitt und die erste und die zweite Düse durch eine erste und eine zweite Nut (31a, 31b) begrenzt sind, die in die erste starre Wand (7) eingegraben sind, und die axial zu der zweiten Hydraulikkammer (B) hin offen sind, wobei die erste und die zweite Nut (31a, 31b) durch eine zweite starre Wand (8) axial geschlossen sind, welche fest mit der ersten starren Wand (7) verbunden ist und das Gehäuse (9) umfasst, wobei die erste und die zweite starre Wand zusammen eine Trennwand (5) bilden, welche die erste und die zweite Hydraulikkammer (A, B) separiert.

11. Antivibrationsvorrichtung nach einem der vorhergehenden Ansprüche, wobei der Generator (20) einen Rotor (21) und einen Stator (22) umfasst, wobei der Rotor (21) eine Anzahl 2N von alternierenden Magnetpolen mit gleichmäßiger Winkelverteilung umfasst, die zu wenigstens einem Permanentmagneten (23) gehören, wobei N eine von Null verschiedene natürliche Zahl ist, und der Stator (22) einen ferromagnetischen Ring (25) umfasst, der gegenüber den Magnetpolen angeordnet ist und eine Anzahl 2N von Ringspulen (26) mit gleichmäßiger Winkelverteilung trägt.

12. Antivibrationsvorrichtung nach einem der vorhergehenden Ansprüche, wobei die Antivibrationsvorrichtung ferner eine elektronische Schaltung (39) umfasst, die wenigstens umfasst:
- einen Wandler (40), der dazu ausgelegt ist, einen vom Generator (20) erzeugten elektrischen Strom in Gleichstrom umzuwandeln,
- eine vom Wandler gespeiste Vorrichtung (41) zum Speichern elektrischer Energie,
- und eine Steuer-/Regeleinrichtung (41), die mit einem Sensor (42) verbunden und dazu angepasst ist, ein Stellglied (37) in Abhängigkeit von Informationen zu steuern/regeln, die von dem Sensor (42) empfangen werden, wobei das Stellglied dazu angepasst ist, auf einen Teil der Antivibrationsvorrichtung einzuwirken.

13. Antivibrationsvorrichtung nach Anspruch 12, wobei der Sensor (42) ein Vibrationssensor ist, der fest mit dem zweiten Stützbauteil (3) verbunden ist.

14. Antivibrationsvorrichtung nach Anspruch 12 oder Anspruch 13, wobei das Stellglied (37) dazu angepasst ist, eine bewegliche Wand (14), welche die erste Hydraulikkammer (A) teilweise begrenzt, selektiv zu blockieren oder freizugeben.

## Claims

1. Hydraulic antivibration device designed to be introduced for damping purposes between the first and second rigid elements, said antivibration device comprising:
- First and second frames (2, 3) adapted to be fixed to the two rigid elements to be united,
- An elastomer body (4) connecting the first and second frames and at least partially bound to a first hydraulic chamber (A),
- A deformable second hydraulic chamber (B) which connects to the first hydraulic chamber (A) via a throttle passage (C), the first and second hydraulic chambers and the throttle passage forming a hydraulic circuit filled with fluid, and the antivibration device being shaped so that said fluid reciprocates along opposing first and second paths (F1, F2) within said throttle passage (C) when the first and second frames (2, 3) are subject to relative vibration movements,
- An electric current-generating device (19) comprising, firstly, a microturbine (18) rotatably mounted about a rotation axis (Z1) in the throttle passage (C) and secondly, a generator (20) coupled to the microturbine to produce electric current as the microturbine rotates,
**characterized in that** the microturbine (18) is configured to be always driven in the same rotational direction (W) by the fluid when said fluid reciprocates along the first and second paths (F1, F2) within the throttle passage (C).

2. Antivibration device according to claim 1, wherein the throttle passage (C) includes a microturbine chamber (17) wherein the microturbine (18) is rotatably mounted, and first and second nozzles (33a, 33b) which open into said microturbine chamber (17) from the first and second hydraulic chambers (A, B) respectively at a substantial tangent relative to the rotation axis, said first and second nozzles (33a, 33b) opening respectively into the microturbine chamber (17) along first and second injection paths (X1, X2), both corresponding to said rotational direction (W),

3. Antivibration device according to claim 2, wherein the first and second nozzles (33a, 33b) open into the microturbine chamber (17) at substantially diametrically opposite positions relative to the rotation axis (Z1);

4. Antivibration device according to any one of claims 2 and 3, wherein the microturbine (18) has curved blades (30) arranged around the rotation axis (Z1) in a median radial plane, each blade being substantially perpendicular to said median radial plane and including a substantially radial inner portion (30c) and an outer portion (30d) which is substantially arranged along the first and second injection paths (X1, X2) when said blade is respectively aligned with the first and second nozzles (33a, 33b),

5. Antivibration device according to any one of the preceding claims, wherein the microturbine (18) comprises blades (30) arranged around the rotation axis (Z1) in a median radial plane, each blade (30) being substantially perpendicular to said median radial plane, and said microturbine (18) having a clearance (27) surrounded by the blades (30).

6. Antivibration device according to claim 5, wherein the blades (30) occupy a first radial thickness (R-R1) and said clearance occupies a second radial thickness (R1-R0), said first radial thickness (R-R1) being between 0.47 and 0.87 times the sum of the first and second radial thicknesses (R-R0);

7. Antivibration device according to any one of claims 5 and 6, wherein the microturbine (18) further comprises at least one hub (29) extending along the rotation axis (Z1) and at least one radial plate (28) connecting said hub (29) to the blades (30);

8. Antivibration device according to claim 7 when depending upon claim 2, wherein the microturbine chamber (17) is a bore in a first fixed wall (7), said bore being delimited axially by a bottom and radially by a cylindrical surface into which the first and second nozzles (33A, 33b) open, said bore being closed by the plate opposite to the bottom of the bore, said hub (29) being rotatably mounted in the bottom of the bore;

9. Antivibration device according to claim 8, wherein the generator (20) comprises a stator (22) and a rotor (21) secured to the microturbine (18), said rotor including a pin (29a) which extends along the rotation axis (Z1) opposite to said hub (29), said pin (29a) being rotatably mounted in the bottom of a housing (9) containing the generator and being secured to said first fixed wall (7);

10. Antivibration device according to claim 9, where the throttle passage (C) comprises first and second sections (C1, C2) which open into the microturbine chamber (17) through said first and second nozzles (33a, 33b), said first and second sections and said first and second nozzles being delimited by first and second grooves (31a, 31b) carved into the first fixed wall (7) and opening axially towards the second hydraulic chamber (B), said first and second grooves (31a, 31b) being axially closed by a second fixed wall (8) secured to the first fixed wall (7) and comprising said housing (9), the first and second fixed walls together forming a partition (5) separating the first and second hydraulic chambers (A, B);

11. Antivibration device according to any one of the preceding claims, wherein the generator (20) comprises a rotor (21) and a stator (22), the rotor (21) having a 2N number of alternating magnetic poles uniformly angularly distributed and belonging to at least one permanent magnet (23), where N is a positive integer, and the stator (22) comprising a ferromagnetic ring (25) arranged facing the magnetic poles and carrying a 2N number of equally angularly distributed toroidal coils (26);

12. Antivibration device according to any one of the preceding claims, wherein the antivibration device further includes an electronic circuit (39) comprising at least:
- A converter (40) adapted to convert into direct current an electric current produced by the generator (20),
- A device for storing electric power (41), fed by the converter (40),
- And a control device (41) connected to a sensor (42) and adapted to control an actuator (37) based on information received from the sensor (42), said actuator being adapted to act on a portion of the antivibration device.

13. Antivibration device according to claim 12, wherein said sensor (42) is a vibration sensor secured to the second frame (3);

14. Antivibration device according to claim 12 or claim 13, wherein said actuator (37) is adapted to selectively block or free a movable wall (14) which partially delimits the first hydraulic chamber (A).
